# EUROPÄISCHE PATENTSCHRIFT

(11) **EP 0 401 156 B1**
(45) Veröffentlichungstag und Bekanntmachung des Hinweises auf die Patenterteilung: **05.05.1993**
(21) Anmeldenummer: 90810244.5
(22) Anmeldetag: 27.03.1990
(51) Int. Cl.: B23B 29/034, B23B 51/00

(54) **Bohrvorrichtung für Hinterschnitt**
Boring device for making undercuttings
Dispositif d'alésage de contre-dépouille

(30) Priorität: 31.05.1989 DE 3917603
(43) Veröffentlichungstag der Anmeldung: 05.12.1990
(73) Patentinhaber: HILTI Aktiengesellschaft, 9494 Schaan (LI)
(72) Erfinder: Mark, Fritz, A-6841 Mäder (AT)
(74) Vertreter: Wildi, Roland

(56) Entgegenhaltungen:
- EP-A- 0 231 720
- EP-A- 0 334 807
- EP-A- 0 382 678
- DE-A- 2 014 690

## Beschreibung

Die Erfindung betrifft eine Bohrvorrichtung zum Erstellen hinterschnittener Bohrungen in einem Untergrund, mit einem sich auf dem Untergrund abstützenden Gehäuse, in welchem eine mit einer exzentrisch angeordneten, achsparallel verlaufenden Bohrung versehene Führungshülse angeordnet ist, mit einer in der Bohrung um einen Winkel von etwa 180° begrenzt drehbar gelagerten Exzenterbüchse und einer in der Exzenterbüchse drehbar gelagerten Antriebswelle mit einem Schneidkopf, wobei zwischen der Führungshülse und der Exzenterbüchse eine bei gegenseitiger Relativverdrehung von Führungshülse und Exzenterbüchse spannbare Torsionsfeder angeordnet ist, zwischen der Führungshülse und dem Gehäuse eine lösbare Einrichtung zur Dreharretierung vorgesehen ist und zwischen der Antriebswelle und der Exzenterbüchse ein Exzentergetriebe mit einem Getriebegehäuse und einem mit dem Getriebegehäuse verbundenen Kugelrad angeordnet ist.

Aus der EP-A-382 678, Stand der Technik gemäß Art 54 (3) EPÜ, ist eine Bohrvorrichtung bekannt, bei der die Exzentrizität der Exzenterbüchse etwa der Exzentrizität der Bohrung in der Führungshülse entspricht. In der Ausgangsstellung heben sich die Exzentrizitäten gegenseitig auf, so dass die Antriebswelle gegenüber der Führungshülse zentrisch angeordnet ist. In dieser Stellung kann die Bohrvorrichtung in ein Bohrloch eingeführt und anschliessend die Antriebswelle von aussen angetrieben werden. Ueber das Exzentergetriebe wird auch die Exzenterbüchse verdreht. Ein Mitdrehen der Führungshülse wird zunächst durch die lösbare Einrichtung zur Dreharretierung verhindert, so dass es unter Spannung der Torsionsfeder zu einer Relativverdrehung zwischen Exzenterbüchse und Führungshülse kommt. Nach einer Verdrehung der Exzenterbüchse um 180° hat die darin gelagerte Antriebswelle unter Einstechen des Schneidkopfes in die Bohrlochwandung ihre maximale Exzentrizität erreicht. Die Einrichtung zur Dreharretierung der Führungshülse wird nun gelöst, so dass sich beim Weiterdrehen der Exzenterbüchse ein umlaufender Hinterschnitt bildet. Ist dieser Vorgang abgeschlossen, verdreht sich die Führungshülse unter Entspannung der Torsionsfeder relativ zur Exzenter büchse. Die Antriebswelle gelangt dabei wieder in die gegenüber der Führungshülse zentrische Ausgangslage und die Bohrvorrichtung kann aus dem Bohrloch herausgezogen werden.

Durch die Reibung im Bohrloch kann das Zurückdrehen der Führungshülse behindert werden, was dazu führt, dass die Antriebswelle gegenüber der Führungshülse exzentrisch bleibt und die Bohrvorrichtung wegen des die Führungshülse radial überragenden Schneidkopfes nicht aus dem Bohrloch herausgezogen werden kann.

Der Erfindung liegt die Aufgabe zugrunde, eine Bohrvorrichtung zu schaffen, die ein sicheres Zurückdrehen von Exzenterbüchse und Führungshülse in ihre Ausgangslage ermöglicht.

Gemäss der Erfindung wird dies dadurch erreicht, dass zwischen dem Hohlrad und dem Getriebegehäuse ein lösbares, der Dreharretierung dienendes Verbindungselement vorgesehen ist und das Hohlrad in der gelösten Stellung des Verbindungselementes von aussen verdrehbar ist.

Nach dem Lösen des Verbindungselementes kann das Hohlrad gegenüber dem Getriebegehäuse verdreht werden. Dabei wird über einen Zahnräderblock ein zweites, mit der Exzenterbüchse verbundenes Hohlrad verdreht. Die Exzenterbüchse kann also über das wegen des hohen Uebersetzungsverhältnisses als starrer Block wirkende Exzentergetriebe von aussen verdreht werden. Damit eine Relativverdrehung zwischen der Exzenterbüchse und der Führungshülse zustande kommt, kann die Führungshülse gegenüber dem Gehäuse in einer Drehrichtung gegen Verdrehen gesichert werden.

Das Verbindungselement ist zweckmässig als Schlingfeder ausgebildet, was eine kompakte Bauweise ermöglicht. Zudem kann eine Schlingfeder leicht gelöst und deren Wirkung aufgehoben werden, indem auf das eine Ende ein Drehmoment ausgeübt und die Verbindung dadurch unterbrochen wird.

Die Erfindung soll nachstehend, anhand der sie beispielsweise wiedergebenden Zeichnungen, näher erläutert werden. Es zeigen:
- Fig. 1: eine erfindungsgemässe Bohrvorrichtung, im Längsschnitt;
- Fig. 2: einen Querschnitt durch die in Fig. 1 dargestellte Bohrvorrichtung, entlang der Linie II-II;
- Fig. 3: einen Querschnitt durch die in Fig. 1 dargestellte Bohrvorrichtung, entlang der Linie III-III;
- Fig. 4: einen Querschnitt durch die in Fig. 1 dargestellte Bohrvorrichtung, entlang der Linie IV-IV;

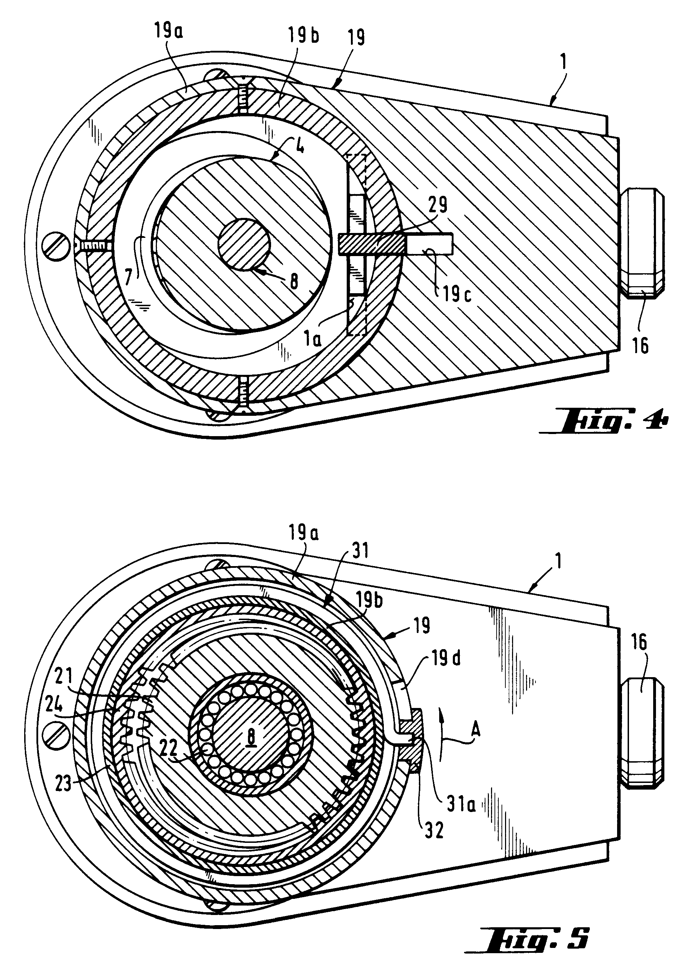

- Fig. 5: einen Querschnitt durch die in Fig. 1 dargestellte Bohrvorrichtung, entlang der Linie V-V.

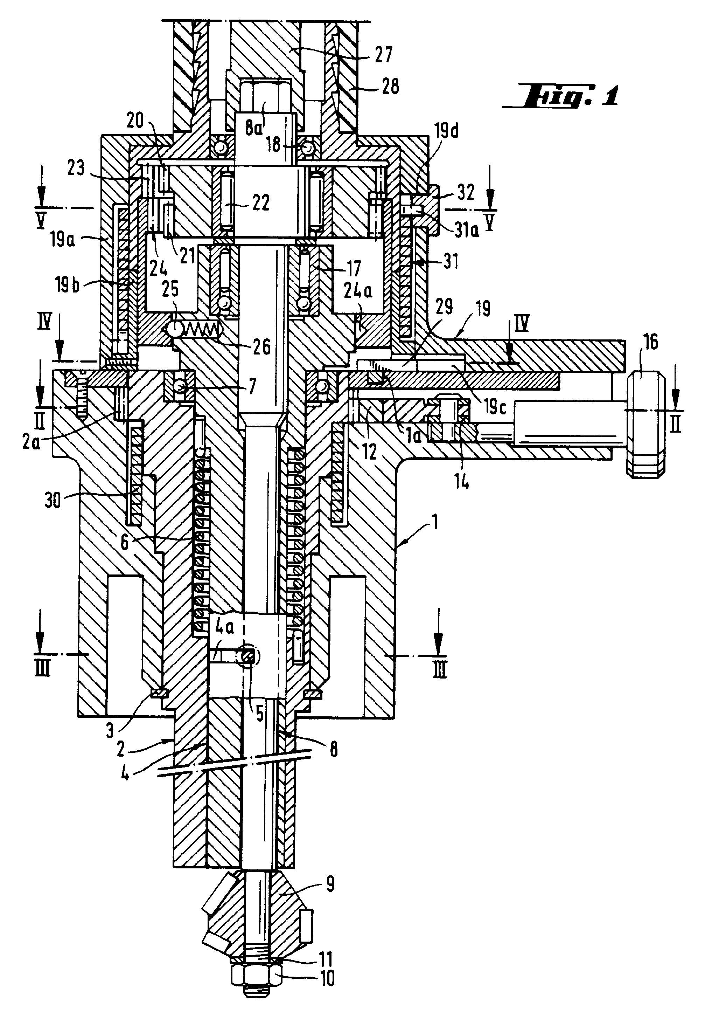

Die erfindungsgemässe Bohrvorrichtung weist ein Gehäuse 1 und eine darin drehbar gelagerte Führungshülse 2 auf. Die Führungshülse 2 ist mittels eines Sicherungsringes 3 in axialer Richtung im Gehäuse 1 gesichert. In einer exzentrisch angeordneten Bohrung der Führungshülse 2 ist eine Exzenterbüchse 4 drehbar gelagert. Die Verdrehbarkeit der Exzenterbüchse 4 gegenüber der Führungshülse 2 wird durch eine sich über einen Teil des Umfanges erstreckende Ringnut 4a und einen darin eingreifenden, in die Führungshülse 2 eingeschraubten Gewindestift 5 begrenzt. Zwischen der Führungshülse 2 und der Exzenterbüchse 4 befindet sich eine sich an beiden Teilen abstützende Torsionsfeder 6. Die Torsionsfeder 6 wird bei Relativverdrehung der Exzenterbüchse 4 gegenüber der Führungshülse 2 gespannt. Die Exzenterbüchse 4 ist über ein Wälzlager 7 in der Führungshülse 2 abgestützt. In einer exzentrischen Bohrung der Exzenterbüchse 4 ist eine Antriebswelle 8 drehbar gelagert. Das vordere, die Führungshülse 2 und die Exzenterbüchse 4 überragende Ende der Antriebswelle 8 ist mit einem Schneidkopf 9 verbunden. In der in Fig. 1 dargestellten Stellung summieren sich die Exzentrizitäten der Führungshülse 2 und der Exzenterbüchse 4, so dass der Schneidkopf 9 die Aussenkontur der Führungshülse 2 überragt. In dieser Stellung wird in bekannter Weise in einem Untergrund ein Hinterschnitt erzeugt. Wird die Exzenterbüchse 4 gegenüber der Führungshülse 2 um 180° geschwenkt, so heben sich die Exzentrizitäten auf. Der Schneidkopf 9 kommt dabei gegenüber der Führungshülse 2 in eine zentrische Lage, so dass die Bohrvorrichtung in ein Bohrloch eingeführt, bzw. aus diesem wieder entnommen werden kann. Der Schneidkopf 9 ist mittels einer Mutter 10 sowie einer Unterlagscheibe 11 auf der Antriebswelle 8 befestigt.

Wie Fig. 2 zeigt, ist die Führungshülse 2 in ihrem rückwärtigen Bereich mit einer Verzahnung 2a versehen. Eine drehbar gelagerte Klinke 12 steht mit der Verzahnung 2a im Eingriff. Der eine Arm der Klinke 12 ist über eine Feder 13 abgestützt. Der andere Arm der Klinke 12 stützt sich an einem Kniegelenkhebel 14 ab. Die freien Enden des Kniegelenkhebels 14 werden durch Druckfedern 15 beaufschlagt. In der in Fig. 2 dargestellten Stellung drückt der Kniegelenkhebel 14 die Klinke 12 in Eingriff mit der Verzahnung 2a. Wird der Druck der Verzahnung 2a jedoch zu gross, so rastet der Kniegelenkhebel 14 über die gestreckte Stellung auf die gegenüberliegende Seite und schiebt dabei den Knopf 16 nach aussen. Die Führungshülse 2 ist somit nicht mehr blockiert und kann zusammen mit der Exzenterbüchse 4 verdreht werden.

Die Antriebswelle 8 ist über ein kombiniertes Nadel-/Kugellager 17 in der Exzenterbüchse 4 gelagert. Eine weitere Lagerung der Antriebswelle 8 erfolgt über ein Kugellager 18 in einem Getriebegehäuse 19. Das Getriebegehäuse 19 besteht aus einem äusseren Teil 19a und einem damit verbundenen inneren Teil 19b.

Auf einem exzentrischen Teil der Antriebswelle 8 ist ein aus zwei Zahnrädern 20, 21 bestehender Getriebeblock über ein Nadellager 22 drehbar gelagert. Das Zahnrad 20 steht im Eingriff mit einem Hohlrad 23 an der Innenseite des Getriebegehäuses 19. Das Zahnrad 21 steht im Eingriff mit einem Hohlrad 24, das im Getriebegehäuse 19 drehbar gelagert und über eine aus einer Kugel 25, einer Feder 26 und Rastöffnungen 24a bestehenden Ueberlastkupplung mit der Exzenterbüchse 4 verbunden ist. Die Zahnräder 20, 21 sowie die Hohlräder 23, 24 bilden ein sogenanntes Exzentergetriebe. Dieses Exzentergetriebe weist bei den geringen Durchmesserunterschieden zwischen den einzelnen Zahnrädern ein sehr hohes Uebersetzungsverhältnis auf. Im vorliegenden Fall beträgt dieses Uebersetzungsverhältnis etwa 1:600. Das rückwärtige Ende der Antriebswelle 8 ist mit einem Sechskant 8a versehen. Eine flexible Welle 27 ist mit dem Sechskant 8a verbunden und dient der Einleitung der Drehbewegung. Die flexible Welle 27 wird von einem Hüllrohr 28 umgeben, das auf den aus dem Getriebegehäuse 19 ragenden Teil des Hohlrades 23 aufgesteckt ist.

Zwischen dem Gehäuse 1 und dem Getriebegehäuse 19 befindet sich ein Führungskreuz 29. Die Wirkungsweise dieses Führungskreuzes ist insbesondere aus Fig. 4 ersichtlich. Der obere Teil des Führungskreuzes 29 ist in einer in Längsrichtung verlaufenden Nut 19c im Getriebegehäuse 19 geführt. Der untere Teil des Führungskreuzes 29 ist in einer um 90° zur Nut 19c verlaufenden Nut 1a im Gehäuse 1 geführt. Das Getriebegehäuse 19 kann sich somit gegenüber dem Gehäuse 1 in Längs- und Querrichtung verschieben, aber nicht verdrehen.

Zwischen dem Gehäuse 1 und der Führungshülse 2 ist eine Schlingfeder 30 angeordnet. Die Schlingfeder 30 bewirkt, dass die Führungshülse 2 im Gehäuse 1 nur in einer Drehrichtung verdreht werden kann. Eine weitere Schlingfeder 31 ist im Getriebegehäuse 19 angeordnet. Die Schlingfeder 31 schafft eine drehfeste Verbindung zwischen dem Getriebegehäuse 19 und dem Hohlrad 23. Ein Ende 31a der Schlingfeder 31 ist radial nach aussen gebogen, ragt in eine Oeffnung 19d des Getriebegehäuses 19 und ist mit einem in Umfangsrichtung verschiebbaren Schieber 32 verbunden. Die Schlingfeder 31 kann somit durch den Schieber 32 von aussen betätigt werden. Wird der Schieber 32 in Richtung des Pfeiles A bewegt, so wird die Schlingfeder 31 abgewickelt und löst sich somit vom Umfang des Hohlrades 23. Das Hohlrad 23 wird somit gegenüber dem Getriebegehäuse 19 verdrehbar. Nach dem Lösen der Schlingfeder 31 kann das Hohlrad 23 über das da mit verbundene Hüllrohr 28 von aussen verdreht werden. Beim Verdrehen des Hohlrades 23 wird über den aus den Zahnrädern 20, 21 bestehenden Getriebeblock auch das Hohlrad 24 und die damit verbundene Exzenterbüchse 4 verdreht.

Die Bohrvorrichtung funktioniert wie folgt:

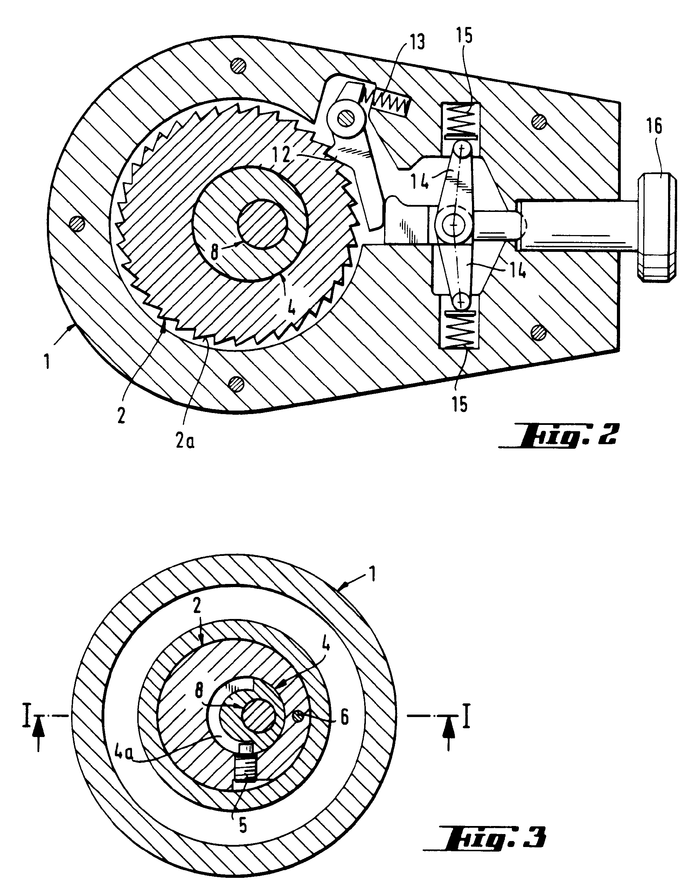

Zunächst wird der Knopf 16 radial nach innen gedrückt und dadurch über den Kniegelenkhebel 14 die Klinke 12 mit der Verzahnung 2a in Eingriff gebracht. Die Führungshülse 2 wird dadurch blockiert. Wird nun die Antriebswelle 8 angetrieben, so wird über das Exzentergetriebe die Exzenterbüchse 4 relativ zur Führungshülse 2 verdreht. Diese Stellung ist aus Fig. 3 ersichtlich. Gelangt der Gewindestift 5 in der Ringnut 4a zur Anlage, so will die Exzenterbüchse 4 die Führungshülse 2 mitdrehen. Um dies zu ermöglichen, muss zunächst in der geschilderten Weise die Klinke 12 mit der Verzahnung 2a ausser Eingriff gebracht werden. Bei der Relativverdrehung der Exzenterbüchse 4 gegenüber der Führungshülse 2 wird die Torsionsfeder 6 gespannt. Der Schneidkopf 9 gelangt dabei von der zentrischen in die exzentrische Lage und schafft sich einen Einstich im Untergrundmaterial. Wird nun die durch die Klinke 12 gebildete Sperre gelöst, so werden die Führungshülse 2 und die Exzenterbüchse 4 miteinander verdreht. Der Schneidkopf 9 schafft sich dabei auf 360° einen Hinterschnitt. Nachdem der Hinterschnitt vollständig geschaffen ist, fällt der Widerstand ab und die Torsionsfeder 6 kann die Führungshülse 2 gegenüber der Exzenterbüchse 4 verdrehen. Durch diese Relativverdrehung gelangt der Schneidkopf 9 gegenüber der Führungshülse 2 wieder in die zentrische Lage.

Durch Verklemmen der Führungshülse 2 im Bohrloch ist es möglich, dass die Kraft der Torsionsfeder 6 nicht ausreicht, um die Führungshülse 2 gegenüber der Exzenterbüchse 4 zu verdrehen. In diesem Fall kann durch Betätigung des Schiebers 32 die Schlingfeder 31 abgewickelt und die drehfeste Verbindung zwischen dem Hohlrad 23 und dem Getriebegehäuse 19 aufgehoben werden. Ueber das Hüllrohr 28, das Hohlrad 23, die Zahnräder 20, 21 und das Hohlrad 24 kann nun die Exzenterbüchse 4 von aussen in eine Lage verdreht werden, in der die Antriebswelle 8 gegenüber der Führungshülse 2 zentrisch angeordnet ist. Damit eine Relativverdrehung zwischen der Exzenterbüchse 4 und der Führungshülse 2 zustande kommt, wird die Führungshülse 2 durch die Schlingfeder 30 gegen Mitdrehen gesichert. Nach dem Loslassen des Schiebers 32 entspannt sich die Schlingfeder 31 wieder und gelangt in Kontakt mit dem Umfang des Hohlrades 23. Dadurch ist die für die Funktion des Exzentergetriebes erforderliche drehfeste Verbindung zwischen dem Hohlrad 23 und dem Getriebegehäuse 19 wieder hergestellt.

## Patentansprüche

1. Bohrvorrichtung zum Erstellen hinterschnittener Bohrungen in einem Untergrund, mit einem sich auf dem Untergrund abstützenden Gehäuse (1), in welchem eine mit einer exzentrisch angeordneten, achsparallel verlaufenden Bohrung versehene Führungshülse (2) angeordnet ist, mit einer in der Bohrung um einen Winkel von etwa 180° begrenzt drehbar gelagerten Exzenterbüchse und einer in der Exzenterbüchse (4) drehbar gelagerten Antriebswelle (8) mit einem Schneidkopf (9), wobei zwischen der Führungshülse (2) und der Exzenterbüchse (4) eine bei gegenseitiger Relativverdrehung von Führungshülse (2) und Exzenterbüchse (4) spannbare Torsionsfeder (6) angeordnet ist, zwischen der Führungshülse (2) und dem Gehäuse (1) eine lösbare Einrichtung zur Dreharretierung vorgesehen ist und zwischen der Antriebswelle (8) und der Exzenterbüchse (4) ein Exzentergetriebe mit einem Getriebegehäuse (19) und einem mit dem Getriebegehäuse (19) verbundenen Hohlrad (23) angeordnet ist, zwischen dem Hohlrad (23) und dem Getriebe gehäuse (19) ein lösbares, der Dreharretierung dienendes Verbindungselement vorgesehen ist und wobei das Hohlrad (23) in der gelösten Stellung des Verbindungselementes von aussen verdrehbar ist.

2. Bohrvorrichtung nach Anspruch 1, dadurch gekennzeichnet, dass das Verbindungselement als Schlingfeder (31) ausgebildet ist.

## Claims

1. Drilling apparatus for producing undercut bores in a background, comprising a housing (1), which is supported against the background and in which is arranged a guide sleeve (2), which is eccentrically arranged and which extends axis-parallel, comprising an eccenter bush, which is mounted to be of limited rotation in the bore around an angle of approximately 180̸°, and comprising a driveshaft (8), which is rotatably mounted in the eccenter bush (4) and which has a cutter (9), in which respect a torsional spring, which is tensioned during opposite relative rotation of guide sleeve (2) and eccenter bush (4), is arranged between the guide sleeve (2) and the eccenter bush (4), and between guide sleeve (2) and housing (1) is provided a detachable device for rotary arrest, and between the driveshaft (8) and the excenter bush (4) is arranged an eccentric gearing comprising a gear housing (19) and a hollow wheel (23) which is connected to the gear housing (19), and provision of a detachable connecting element, which serves the rotary arrest, between the hollow wheel (23) and the gear housing (19), and wherein the hollow wheel (23) is rotatable from the outside whilst the connecting element is in the released position.

2. Drilling apparatus according to claim 1, **characterised in that** the connecting element is arranged to be a loop spring (31).

## Revendications

1. Dispositif de perçage pour la réalisation de trous contre-dépouillés dans un matériau de réception, comprenant un carter (1) qui s'appuie sur la matériau de réception et dans lequel est disposée une douille de guidage (2) munie d'un alésage excentré et orienté parallèlement à l'axe, un coussinet d'excentrique monté dans l'alésage de manière à pouvoir tourner d'un angle limité d'environ 180°, et un arbre moteur (8) avec une tête de coupe (9), monté de manière tournante dans le coussinet d'excentrique (4), un ressort de torsion (6) étant monté entre la douille de guidage (2) et le coussinet d'excentrique (4), qui peut être tendu lors d'une rotation relative de la douille de guidage (2) et du coussinet d'excentrique (4), un dispositif amovible pour le blocage en rotation étant prévu entre la douille de guidage (2) et le carter (1), un mécanisme à excentrique avec une boîte d'engrenages (19) et une couronne (23) couplée avec ladite boîte d'engrenages (19) étant disposé entre l'arbre moteur (8) et le coussinet d'excentrique (4), un élément d'accouplement amovible pour le blocage en rotation étant prévu entre la couronne (23) et la boîte d'engrenages (19), et la couronne (23) pouvant être tournée par l'extérieur dans la position débloquée de l'élément d'accouplement.

2. Dispositif de perçage selon la revendication 1, caractérisé en ce que l'élément d'accouplement est conformé en ressort enroulé (31).
